# EUROPEAN PATENT SPECIFICATION

(11) **EP 1 700 722 B1**
(45) Date of publication and mention of the grant of the patent: **06.02.2008**
(21) Application number: 05425147.5
(22) Date of filing: 11.03.2005
(51) Int. Cl.: B60H 1/00

(54) **Air treatment assembly for vehicles**
Kraftfahrzeugluftbehandlungsvorrichtung
Dispositif de traitement de l'air pour véhicules

(43) Date of publication of application: 13.09.2006
(73) Proprietor: DENSO THERMAL SYSTEMS S.p.A., 10046 Poirino (Torino) (IT)
(72) Inventor: Balzo, Michele, 10046 Poirino (Torino) (IT); Carbone, Andrea, 10046 Poirino (Torino) (IT)
(74) Representative: Marchitelli, Mauro

(56) References cited:
- DE-A1- 3 916 816
- FR-A- 2 742 491
- US-A1- 2004 172 927

## Description

The present invention relates to an air treatment assembly for vehicles, comprising:
- a case made of plastic material having at least one seat open on a single side for a heat exchanger,
- a heat exchanger inserted in said seat according to a general drawer arrangement, and
- means for fastening the heat exchanger in its seat.

This constructive arrangement is generally used to house the radiator for heating the flow of air sent into the passenger compartment of the vehicle. The heating radiator is inserted in a seat of flattened rectangular shape formed in the case of the air treatment assembly starting from the only open side of said seat and it is subsequently fastened to the case by means of fastening brackets and screws.

FR-A-2742491, which is considered as the closest prior art, discloses an air treatment assembly according to the preamble of claim 1, including a bridge-like fastening element having opposite elastic teeth which engage in snap-on fashion corresponding openings formed on the case.

The object of the present invention is to provide an improved assembly that allows to fasten the heat exchanger in its seat without the use of screws or of fastening tools and with a more stable connection between the fastening element and the case than the prior art solution.

According to the present invention, said object is achieved by a heat exchange assembly having the characteristics set out in claim 1.

The present invention shall now be described in detail with reference to the accompanying drawings, provided purely by way of non limiting example, in which:
- Figures 1 and 2 are partial perspective views of an air treatment assembly according to the present invention,
- Figure 3 is a section that illustrates the mounting of a fastening element according to the present invention, and
- Figure 4 is a section that shows the fastening element in mounted position.

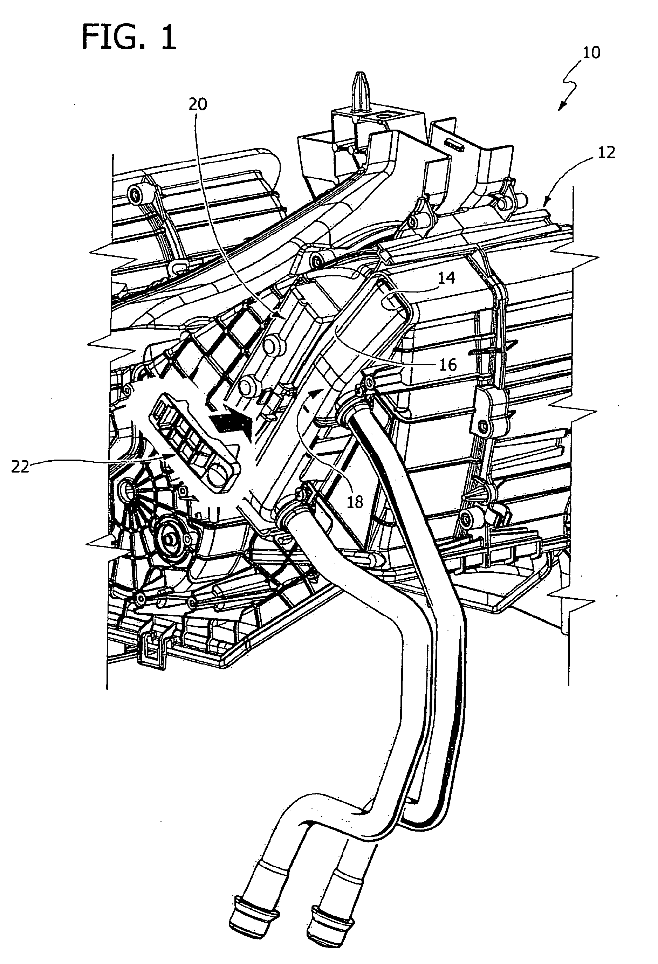

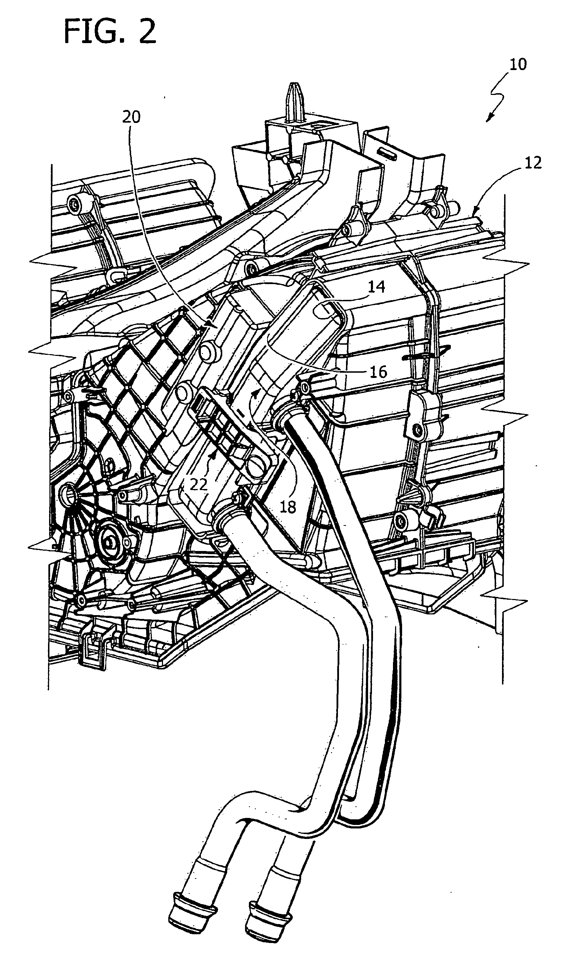

With reference to Figures 1 and 2, the reference number 10 designates an air treatment assembly for vehicles. The assembly 10 is able to produce a flow of heated or conditioned air and to distribute the flow of air in the passenger compartment of a vehicle (not shown). The air treatment assembly 10 comprises an outer case 12 made of injection moulded plastic material in which are housed various components of the assembly, among them a fan assembly (not shown) which produces the flow of air to be treated. Within the case 12 are defined conduits for the distribution of the flow of air towards various parts of the passenger compartment.

The case 12 comprises a drawer seat 14 open on a single side. The open side of the seat 14 is designated by the reference number 16 and it has a flattened rectangular shape. The drawer seat 14 receives a heat exchanger 18 for heating the air flow. The heat exchanger 18 is inserted in the seat 14 according to a general drawer arrangement. This means that the heat exchanger 18 is inserted in the seat 14 with sliding motion along a longitudinal rectilinear direction starting from the opening 16 of the seat 14 and it is guided in the seat 14 along the smaller sides of the seat, in a fashion similar to the movement of a drawer.

The assembly 10 can be provided with a second heat exchanger 20 constituted by a supplementary electrical heater. The second heat exchanger 20 is inserted in a respective seat adjacent to the seat 14 of the first heat exchanger 18. The supplementary electrical heater 20, too, can be inserted in the respective seat according to a general drawer arrangement through the only open side of the seat.

The heat exchanger 18 for heating the flow of air is fastened in the respective seat 14 by means of a fastening element 22 fastened in snap-on fashion to the outer case 12. The fastening element 22 is a separate component, independent of the case 12, preferably produced by injection moulding. The fastening element 22 has a generically bridge-like shape and extends through the open side 16 of the seat 14 forming a sort of bridge which connects the two larger sides of the opening 16 to each other.

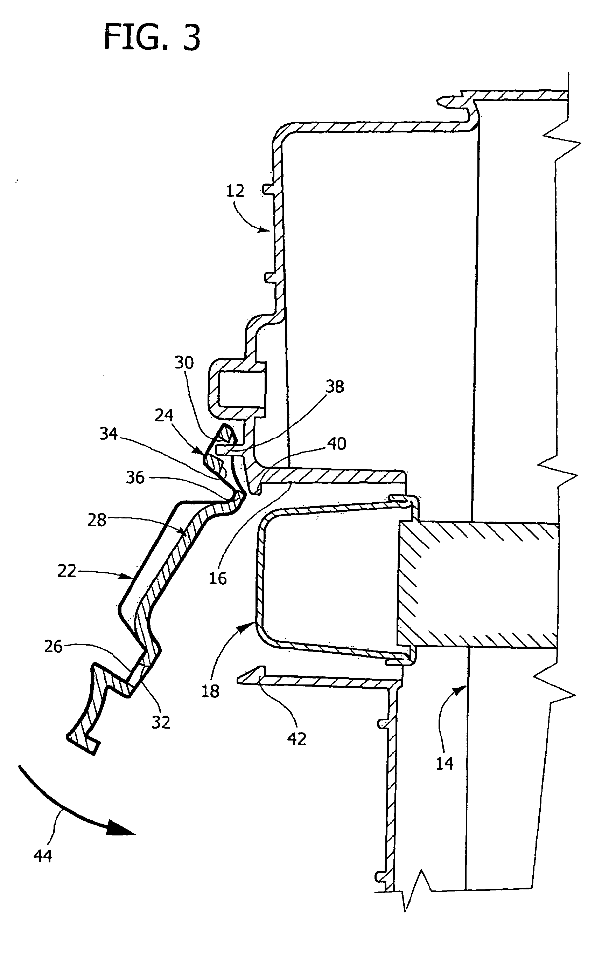

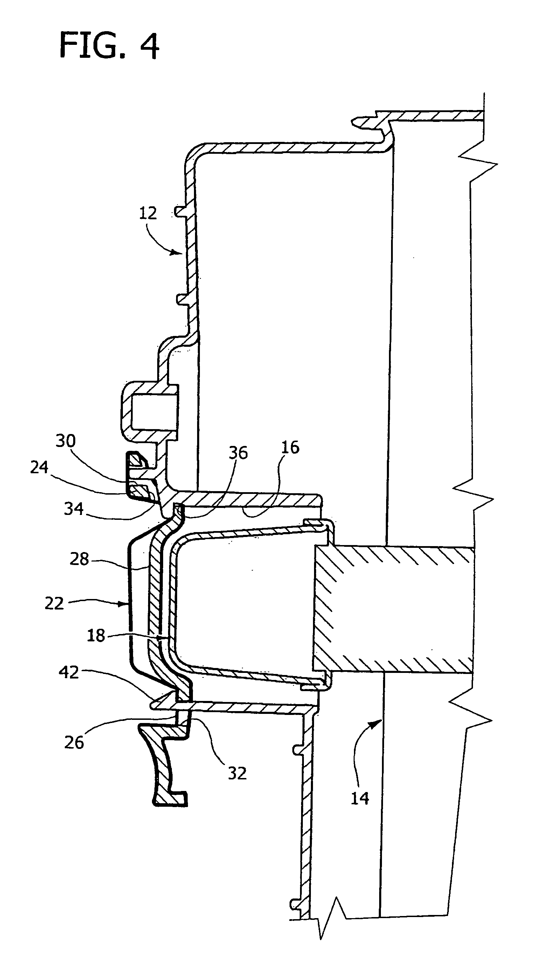

With reference in particular to Figures 3 and 4, the fastening element 22 is a monolithic body with two end portions 24, 26 and a central portion 28. The end portions 24, 26 are provided with respective holes 30, 32. The end portion 24 also comprises a second opening 34 that ends with an engagement formation 36.

Still with reference to Figures 3 and 4, the case 12 comprises integral engagement formations for fastening the bridge element 22 obtained on opposite longitudinal sides of the opening 16 in a substantially central position of said sides. The engagement formations comprise on a first side two projections 38 and'40 oriented substantially at 90° with respect to each other. On the opposite side is provided a snap-on engagement tooth 42 which projects from the case 12 in parallel direction to the direction of insertion of the heat exchanger 18 in the seat 14.

As shown in Figure 3, the fastening element 22 is positioned in such a way that the projection 38 is inserted in the opening 30. Then, the fastening element 22 is made to rotate in the direction indicated by the arrow 44. As a result of this rotation, the projection 40 engages the second opening 34 and the engagement formation 36 comes, in contact with the inner side of the projection 40 as illustrated in Figure 4. At the same time, the engagement tooth 42 engages in snap-on fashion the opening 32 of the end portion 26. As shown in Figure 4, in the mounted condition the fastening element 22 extends through the opening 16 of the seat 14 and forms a bridge that prevents the extraction of the heat exchanger 18 from the seat 14. The fastening element 22 is mounted without the use of tools and fastening elements.

Naturally, without altering the principle of the invention, the construction details and the embodiments may be varied widely from what is described and illustrated herein, without thereby departing from the scope of the invention, as defined by the claims that follow.

## Claims

1. Air treatment assembly for vehicles, comprising:
- an outer case (12) made of plastic material having at least one seat (14) open on a single side (16) for a heat exchanger (18),
- a heat exchanger (18) inserted in said seat (14) according to a general drawer arrangement, and
- means for fastening the heat exchanger (18) in its seat (14), comprising a bridge-like fastening element (22) separate from the case (12) and fastened in snap-on fashion to the case (12) through said open side (16) of the seat (14)
**characterised in that**
said bridge fastening element (22) comprises a first end portion (24) and a second end portion (26) provided with respective holes (30, 32) in which a first opening (30) engages a projection (38) of the case (12) and the second opening (32) is engaged by a snap-on engagement tooth (42), integral with respect to the case (12), the first fastening portion (24) of the bridge-like fastening element (22) comprising an additional opening (34) engaged by a second projection (40) oriented orthogonally relative to the first projection (38).

## Patentansprüche

1. Luftbehandlungsanordnung für Fahrzeuge, die umfasst:
- eine äußere Verkleidung (12), die aus Kunststoffmaterial besteht und wenigstens eine Aufnahme (14) hat, die an einer Seite (16) für einen Wärmetauscher (18) offen ist,
- einen Wärmetauscher (18), der in die Aufnahme (14) in einer allgemeinen schubladenartigen Anordnung eingeführt ist, und
- eine Einrichtung zum Befestigen des Wärmetauschers (18) in seiner Aufnahme (14), die ein brückenartiges Befestigungselement (22) separat von der Verkleidung (12) umfasst, das über die offene Seite (16) der Aufnahme (14) einrastend an der Verkleidung (12) befestigt ist,
**dadurch gekennzeichnet, dass**
das Brücken-Befestigungselement (22) einen ersten Endabschnitt (24) und einen zweiten Endabschnitt (26) umfasst, die mit entsprechenden Löchern (30, 32) versehen sind, wobei eine erste Öffnung (30) mit einem Vorsprung (38) der Verkleidung (12) in Eingriff kommt und die zweite Öffnung (32) mit einem Einrastzahn (42) in Eingriff kommt, der integral mit der Verkleidung (12) ausgebildet ist, und der erste Befestigungsabschnitt (24) des brückenartigen Befestigungselementes (22) eine zusätzliche Öffnung (34) umfasst, die mit einem zweiten Vorsprung (40) in Eingriff kommt, der relativ zu dem ersten Vorsprung (38) rechtwinklig ausgerichtet ist.

## Revendications

1. Ensemble de traitement d'air pour véhicules, comprenant :
- un carter extérieur (12) en matière plastique comprenant au moins un siège (14) ouvert d'un seul côté (16) pour un échangeur de chaleur (18),
- un échangeur de chaleur (18) inséré dans le siège (14) selon un montage formant globalement tiroir, et
- des moyens pour fixer l'échangeur de chaleur (18) dans son siège (14), comprenant un élément de fixation (22) semblable à un pont, séparé du carter (12) et fixé par enclenchement sur le carter (12) par le côté (16) ouvert du siège (14)
**caractérisé en ce que**
l'élément de fixation en pont (22) comprend une première partie terminale (24) et une deuxième partie terminale (26) pourvues de perçages respectifs (30, 32), dans lequel une première ouverture (30) coopère avec une saillie (38) du carter (12) et la deuxième ouverture (32) reçoit une dent d'enclenchement (42), solidaire du carter (12), la première partie de fixation (24) de l'élément de fixation en pont (22) comprenant une ouverture (34) supplémentaire recevant une deuxième saillie (40) orientée perpendiculairement à la première saillie (38).
